(19) Europäisches Patentamt
European Patent Office
Office européen des brevets

(11) **EP 4 653 856 A1**

(12) **EUROPEAN PATENT APPLICATION**

(43) Date of publication:
**26.11.2025 Bulletin 2025/48**

(21) Application number: **24177182.3**

(22) Date of filing: **21.05.2024**

(51) International Patent Classification (IPC):
**G01N 25/48** *(2006.01)*

(52) Cooperative Patent Classification (CPC):
**G01N 25/4846; G01N 25/4866**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Malvern Panalytical Inc.**
**Westborough, MA 01581 (GB)**

(72) Inventors:
• **KNIGHT, Michael**
  **Malvern, WR14 1XZ (GB)**
• **MARKOVA, Natalia**
  **75216 Uppsala (SE)**

(74) Representative: **Barker Brettell LLP**
**100 Hagley Road**
**Edgbaston**
**Birmingham B16 8QQ (GB)**

(54) **ISOTHERMAL TITRATION CALORIMETRY METHOD OF ANALYSIS**

(57)    A computer-implemented method of analysing isothermal titration calorimetry data is provided. The method comprises: obtaining isothermal titration calorimetry measurement data from analysis of one or more samples and fitting a model to the measurement data. The comprises an expression for each of: a source term modelling the injection of an analyte solution; a buffer heat release term modelling the heat released from the mixing of buffers during injection of an analyte solution; a reaction term modelling a reaction between an analyte and the sample; and a baseline term comprising a series of basis functions. The method further comprises determining a physical parameter of the sample from the model.

310 – Obtain isothermal titration calorimetry measurement data from analysis of a sample

320 – Fit a model to the measurement data

330 – Determine a physical parameter of the sample from the model

**FIGURE 3**

EP 4 653 856 A1

**Description**

FIELD OF INVENTION

The present invention relates generally to microcalorimeters and more specifically to features that improve the analysis of data from microcalorimeters, especially isothermal titration calorimeters.

BACKGROUND

Microcalorimeters are broadly utilised in fields of biochemistry, pharmacology, cell biology, and others. Calorimetry provides a direct method for monitoring physico-chemical and biochemical processes and measuring changes in thermodynamic properties of biological macromolecules. Microcalorimeters typically have a differential design with two cells in which properties of a dilute solution of an analyte in an aqueous sample in a sample cell are continuously compared to an equal quantity of aqueous sample in a reference cell. Measured differences between the properties of the two cells, such as temperature or heat flow, are attributed to a physico-chemical or biochemical process associated with the analyte in the sample cell.

One type of microcalorimeter is an isothermal titration calorimeter. The isothermal titration calorimeter (ITC) is an isothermal device that keeps liquid in the sample cell and reference cell at an equal temperature. The liquid in the sample cell is typically continuously stirred. A popular application for titration calorimetry is in the characterisation of the thermodynamics of molecular interactions. In this use case, a dilute solution of a sample (e.g., a protein) is placed in the sample cell and, at various times, small volumes of a second dilute solution containing an analyte (which may react with the sample), are injected into the sample cell. The instrument measures the heat which is evolved or absorbed as a result of the addition of the analyte to the sample. From results of single- or multiple-injection experiments, properties, such as, the Gibbs energy, the association constant, the enthalpy and entropy changes, and the stoichiometry of binding, may be determined for a particular pairing between the sample and the ligand.

A known ITC experiment comprises one or more injections of analyte into the sample cell and the concomitant measurement of the rate of heat flow released as a function of time. Conventionally, the measured data has a peak resulting from each injection of the analyte. A model is then fitted to the integrals of the peaks (which corresponds to the total heat release per injection) to estimate the thermodynamics properties of the interaction between the analyte and the sample.

The known ITC experiment framework has certain limitations. For example, the analysis typically only delivers insight into the thermodynamics. It may be possible to study the kinetics by analysing the shape and form of the measured signal, however this typically requires additional equipment and experimentation.

A further limitation is that since the model is fitted to the integrals of the peaks, the model has as many data points as there are injections, which is typically only 10-20, and therefore drastically limits the model complexity and range of systems that may be studied.

An associated limitation is that an ITC experiment may not be fully optimised for a given sample, such that the information of interest is poorly encoded in the peak integrals. For example, there may be no further heat release after a very limited number of injections, to which a model is very difficult to reliably fit.

A further limitation is that the analysis is dependent on an estimate of the signal baseline on which a useful signal is superimposed. This is subjective and not without error. Furthermore, in order to obtain accurate peak integrals, the system must re-equilibrate between injections. This leads to a low throughput and long experiment times as well as an increased risk of significant baseline drift or sample degradation.

The invention described herein is aimed to improve the aforementioned characteristics and analysis of prior art ITC data such that both the thermodynamics and the kinetics of interactions can be measured more accurately, with a higher throughput, and reduced subjectivity.

SUMMARY OF INVENTION

According to a first aspect of the invention, there is provided a computer-implemented method for analysing isothermal titration calorimetry data. The method may obtain isothermal titration calorimetry data from analysis of a sample. The method may fit a model to the measurement data. The method may determine a physical parameter of the sample from the model.

Obtaining the isothermal titration calorimetry data may comprise receiving the data via a network or reading the data from a non transitory machine readable storage medium. Obtaining the data does not necessarily include performing a measurement to obtain the data.

The model may comprise an expression for at least one of the following: a source term; a buffer heat release term; a reaction term; and/or a baseline term.

The source term may model the injection of an analyte solution. The source term may model the injection of an analyte solution as a bell-shaped function. The bell-shaped function may be a Gaussian function or a Lorentzian function. The source term may model the injection of an analyte solution as a continuous and/or smooth function. The continuous and/or smooth function may have a global maximum and at least one inflection point on either side of the global maxima. The person skilled in the art will appreciate that other functions may be used besides Gaussian and Lorentzians.

The buffer heat release term may model the heat released from the mixing of buffers during injection of an analyte solution. The buffer heat release term may model the heat released from the mixing of buffers during injection of an analyte solution as a curve segment with two local minima at each end-point and a global maximum therebetween. Preferably, the curve segment is modelled as a squared sine lobe.

The reaction term may model a reaction between at least one analyte and the sample. The reaction term may be modelled as a matrix equation, preferably by the generalised mass action theory. The reaction term may depend on a stoichiometry of the reaction. The reaction term may depend on a reaction order. The reaction term may depend on a rate constant of the reaction. In the case where there are a plurality of analytes, the reaction term may depend on the stoichiometries of the reactions and/or the rate constants of the reactions.

The baseline term may be a smooth function. Smooth may mean continuous, differentiable, and/or at least twice differentiable. The baseline term may comprise a series of basis functions. The baseline term may be a power series. The baseline term may be a Fourier series. The basis functions of the baseline term may be a series of orthogonal polynomials. Preferably, the basis functions of the baseline term are a series of Legendre polynomials. Alternatively, the basis functions may be a series of Gegenbauer polynomials or Chebyshev polynomials.

Fitting the model may comprise fitting a signal model that does not comprise the baseline term to determine a modelled signal. The signal model may comprise a source term modelling the injection of an analyte solution; a buffer heat release term modelling the heat released from the mixing of buffers during injection of an analyte solution; and/or a reaction term modelling a reaction between an analyte and the sample. Fitting the model may further comprise subtracting the modelled signal from the measurement data to determine a remainder signal. Fitting the model may further comprise fitting the baseline term to the remainder signal. The physical parameter may be determined from the fitted model.

Alternatively, fitting the model may further comprise fitting a final model that includes at least one of: the source term; buffer heat release term; reaction term; and baseline term. An initial estimate for the baseline term in the final model fit may be that determined from fitting the baseline term to the remainder signal. The physical parameter may be determined from the final model.

The physical parameter may comprise at least one of: Gibbs energy; association constant; (standard) enthalpy change; entropy change; stoichiometry of binding; and/or the kinetics. The kinetics may be a rate constant for each unidirectional reaction.

Fitting the signal model may comprise using a non-linear least squares regressor. Fitting the baseline term may comprise using an ordinary least squares regressor. The person skilled in the art will appreciate that other types of regressors may be appropriate.

According to a second aspect of the invention, there is provided a computer-implemented method of producing a model for analysing isothermal titration calorimetry data. The method may comprise generating synthetic data using a model. The model may comprise at least one of: a source term modelling the injection of an analyte solution; a buffer heat release term modelling the heat released from the mixing of buffers during injection of an analyte solution; a reaction term modelling a reaction between an analyte and the sample; and/or a baseline term comprising a series of basis functions. The method may comprise training a machine learning model using the synthetic data. Preferably, the machine learning model is a random forest. The machine learning model may alternatively be a neural network. The person skilled in the art will understand that alternative machine learning models and combinations thereof are possible.

According to a third aspect of the invention, there is a provided a method of analysing isothermal titration calorimetry data. The method may comprise obtaining isothermal titration calorimetry data from analysis of a sample. The method may determine a physical parameter of the sample from a model produced by the second aspect of the invention.

According to a fourth aspect of the invention, there is provided a machine-readable storage medium. The machine-readable storage medium may comprise instructions for configuring a computer to execute a method according to any of the first, second, or third aspects.

According to a fifth aspect of the invention, there is provided an isothermal titration calorimetry, ITC, instrument configured to perform a method according to any of the first, second, or third aspects.

The ITC instrument may comprise a sample cell for containing a sample. The ITC instrument may comprise a reference cell for containing a reference solution. The ITC instrument may comprise an injection mechanism for injecting an analyte solution. The ITC instrument may comprise a differential temperature sensor for determining a temperature gradient across the sample cell and reference cell. The differential temperature sensor may comprise a reference temperature sensor and a sample temperature sensor. The temperature gradient across the sample cell and reference cell may be the difference in temperature between the reference temperature sensor and the sample temperature sensor. The ITC instrument may comprise a sample heater for heating the sample cell. The ITC instrument may comprise a reference heater for heating the reference cell. The ITC instrument may comprise a controller configured to receive input from the differential temperature sensor and control the sample heater and/or the reference heater such that the temperature in the sample cell and reference cell is the same. The ITC instrument may comprise a computer configured to receive measurement data from the controller and perform the method according to any of the first, second, or third aspects. The measurement data from the controller may be the power provided to the reference heater in order to keep the temperature in the sample cell and reference cell is the same. Keeping the temperature across the cells the same may comprise keeping the two cells at constant temperature. Keeping the temperature across the cells the same may alternatively comprise providing energy to the reference heater such that the reference cell keeps the same temperature as the sample cell.

The ITC instrument may further comprise a stirring mechanism that is located partially within the sample cell. The stirring mechanism may be used to homogenise the sample upon injection of the analyte. The ITC instrument may be located partially within a thermal shield. The computer may be located outside the thermal shield.

BRIEF DESCRIPTION OF FIGURES

The invention will be described, by way of example, with reference to the accompanying drawings, in which:

Figure 1 shows a schematic diagram of an isothermal titration calorimeter.

Figure 2 shows a schematic diagram of a computer for executing the method of the present disclosure.

Figure 3 shows a schematic diagram of the method of the present disclosure.

Figure 4 shows a plot containing a measurement data set and a plot representing the fitted model.

Figure 5 shows a schematic diagram of a machine learning model of the present disclosure.

Figure 6 shows a series of plots showing the example of the use of a surrogate model to describe an ITC signal in accordance with the present disclosure.

Figure 7 shows a series of plots showing an example of the performance of a machine learning model trained using the method of the present disclosure.

Figure 8 shows a plot demonstrating use of machine learning in accordance with the present disclosure to identify probable reactions in a system.

DETAILED DESCRIPTION OF THE INVENTION

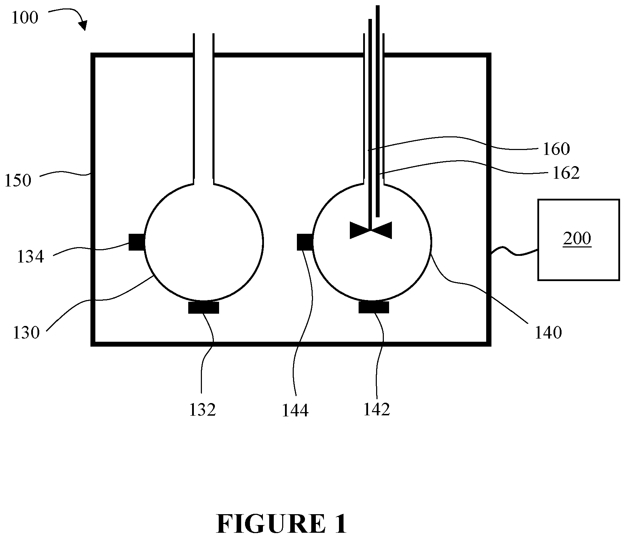

Referring to Figure 1, an exemplary isothermal titration calorimeter (ITC) system 100 is shown. The ITC system 100 comprises a reference cell 130 and a sample cell 140 which are designed to be essentially identical in heat capacity and volume. The cells 130, 140 are comprised of a suitably chemically inert and heat conductive material, such as gold, platinum, tantalum, Hastelloy or the like. The cells 130 and 140 may be of essentially any suitable shape, but it is desirable that they are of the same shape, that they are possible to arrange in a fully symmetric arrangement, and that efficient mixing of the analyte solution with the sample may be achieved.

In order to reduce any external thermal influences to a minimum, the reference cells 130 and sample cell 140 are both enclosed by a thermal shield 150. The thermal shield 150 may be comprised of any suitable thermally conductive material such as silver, aluminium, copper, or the like.

The sample cell 140 further comprises a stirring mechanism 160 and injection mechanism 162. The stirring mechanism 160 aids rapid homogenisation of the sample upon injection of the analyte. The injection mechanism 162 for the injection of the analyte solution into the sample cell 140. Conventionally, the injection mechanism 162 is an automatic titration device, but other mechanisms are equally possible.

The reference cell 130 is provided with a reference heater 132 and a reference temperature sensor 134. The sample cell 140 is provided with a sample heater 142 and a sample temperature sensor 144. A controller is provided (not shown in Figure 1) which receives signals from the reference and sample temperature sensors 132, 134 and controls the reference heater 132 and sample heater 142 to maintain the reference cell 130 and sample cell 140 at the same temperature.

During an ITC experiment, buffer and sample solutions (not shown) are placed in the reference cell 130 and sample cell 140, respectively. An analyte (not shown) in a buffer solution is then injected using the injection mechanism 162 repeatedly into the sample cell 140 in known aliquots and at known intervals. The analyte solution reacts with the sample in the sample cell 140 causing heat to either be taken up or evolved (depending on if the reaction is exothermic or endothermic).

The reference cell 130 and sample cell 140 are maintained at the same temperature by controlling relative power applied to the reference heater 132 and sample heater 142. For example, if a constant power of 1 mW is applied to the reference heater 132, and a reaction between the analyte and the sample solution releases 1 mW of power, the sample heater power will be reduced to 0 mW in order to maintain the sample cell 140 at the same temperature as the reference cell 130. If no heat is produced in the sample cell 140 the power applied at the reference heater 132 and sample heater 142 would be the same.

The measured data consists of the time-dependent input of power required to maintain equal temperatures between the sample cell 140 and reference cell 130, equivalently called the signal. The signal may, for example, be the power provided to the sample heater 142 minus the power provided to the reference heater 132 - this signal would be negative when energy is released by the addition of the analyte to the sample cell.

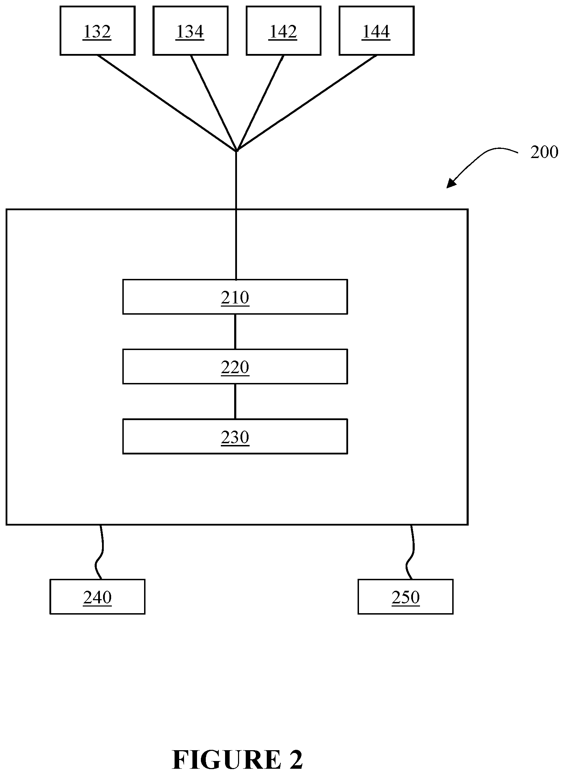

With reference to Figure 2, there is provided a computer 200 for executing a method according to the present invention. The computer is provided with a controller 210 for controlling the heaters 132 and 142 during ITC experiments. The computer 200 further comprises a memory 220 and a processor 230. The computer comprises a display 240 for displaying results and at least one I/O device 250 (e.g., a mouse and keyboard).

It will be readily understood that the computer 200 need not be entirely collocated with the ITC system 100. The memory 220 and processor 230, for example, may be a cloud compute resource.

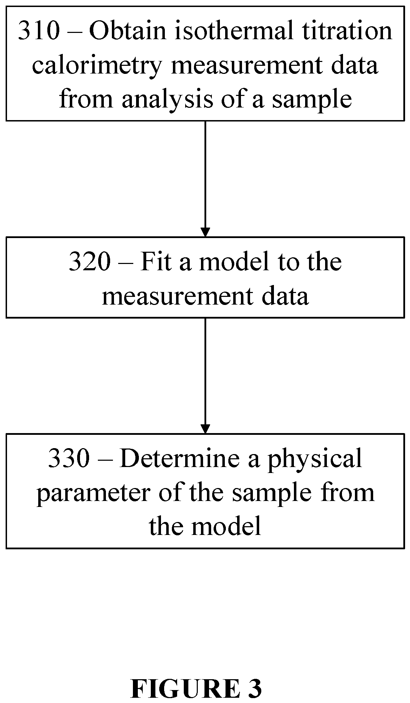

The method of the present invention is described with reference to Figure 3. At 310, the processor 230 obtains isothermal titration calorimetry measurement data from analysis of a sample (e.g. via the controller 210). The measurement data may be obtained by processor 230 via any suitable means, including but not limited to ethernet, WiFi®, USB, or the like.

At 320, the processor 230 fits a model to the measurement data. The model preferably comprises an expression for each of: a source term modelling the injection of an analyte solution; a buffer heat release term modelling the heat released from the mixing of buffers during injection of an analyte solution; a reaction term modelling a reaction between an analyte and the sample; and a baseline term comprising a series of basis functions. Each term as well as methods of fitting will now be discussed in detail.

Source term

The source term, $g(\boldsymbol{c})$, is a function of a vector $\boldsymbol{c}$ of all the concentrations of the reagents in the ITC experiment. The source term takes the general form:

$$g(\boldsymbol{c}) = \frac{1}{V}\frac{dV_I(t)}{dt}\left(\boldsymbol{c}^{inj} - \boldsymbol{c}(t)\right) \tag{1}$$

$V$ is the fixed volume of the sample cell 140, $\frac{dV_I(t)}{dt}$ is the rate of change of volume due to injection (injection profile), $\boldsymbol{c}^{inj}$ is the concentrations of the reagents in the injector. It is assumed that the reagents in the injector are at equilibrium. $\boldsymbol{c}(t)$ is the concentration vector of the reagents in the sample cell 140. In prior art models, the injection profile was considered as instantaneous and/or modelled as a rectangular pulse. However, it was realised that this was insufficient. In the present invention, the sample cell 140 is considered to have a delayed and smooth response to the injection of the analyte solution. The inventors of the present disclosure realised that Gaussian and Lorentzian functions (as shown in equations (2) and (3) respectively) are appropriate ansatz functions.

$$\frac{dV_I(t)}{dt} = \frac{1}{\sigma\sqrt{2\pi}}e^{-\frac{1}{2}\left(\frac{t-\mu}{\sigma}\right)^2} \tag{2}$$

$$\frac{dV_I(t)}{dt} = \frac{1}{\pi}\frac{\frac{1}{2}\Gamma}{(t-t_0)^2 + \left(\frac{1}{2}\Gamma\right)^2} \tag{3}$$

Where $\sigma$, $\mu$ or $\Gamma$, $t_0$ are learnable parameters of the model. These injection profiles allow the model to account for non-instantaneous mixing that continues after the physical operation of the injector has ceased.

Buffer heat release term

During an injection, the buffers of the sample and the analyte solution mix and release heat. This is typically faster than the physical injection duration. The inventors of the present disclosure realised that it was not practical to model this heat release using detailed thermokinetic models and instead employed a simpler heuristic approach. The heat release term $\beta_t$ in the present disclosure is therefore modelled as a lobe of a squared sign curve.

$$\beta_t = a \, \sin^2\left(\frac{2\pi(t-\tau)}{L}\right), \qquad \tau + \frac{kL}{2} \leq t \leq \tau + \frac{(k+1)L}{2} \qquad (4)$$

Where $a \neq 0$, $\tau$, $L$ are all learnable parameters of the model.

Reaction term

The reaction term models the reaction between the at least one analyte and the sample. This is achieved by defining channels as being a unidirectional transformation between one state of concentrations of reagents and another state. A channel $i$ is associated with a rate constant $k_i$. For a particular reagent $j$, at a concentration of $c_j$, and channel $i$, there is an associated stoichiometry term $S_{ij}$ representing the number of reagent molecules consumed in that particular channel. There is further an associated reaction order $P_{ji}$. The reaction term is then modelled as the following matrix equation:

$$k(c) = Sv$$

where

$$v_j = k_j \prod_m \{c_m\}^{P_{mj}}$$

All rate constants $k_i$ are learnable parameters of the model. The reaction, including the stoichiometries and orders, can be set by a user. Optionally, some of the rate constants $k_i$ may be set by a user

Baseline term

By modelling the baseline, the ITC signal does not need to return to re-equilibrate between injections. In other words, the ITC experiment does not need to wait for the signal to return to the original baseline. An effect of this is that there is a reduction in wait time between injections and so the throughput of the experiment is increased. Additionally, this decreases the risk of significant baseline drift or sample degradation. The baseline in the present disclosure is modelled as such:

$$\varepsilon_t = \sum_k b_k f_k(t) + \eta_t \qquad (6)$$

Where $f_k(t)$ is preferably a Legendre polynomial. i.e. a polynomial that satisfies $\int_{-1}^{1} f_m(t)f_n(t)dt = 0$ for $n \neq m$. The coefficients $b_k$ are learnable parameters of the model. $\eta_t$ is a Gaussian white noise process that is not fit in the model. Whilst there is no guarantee that $\eta_t$ is stationary, the drift is minimised due to improved experiment throughput.

Generalised model

A first model is provided as the rate of change of temperature. This is an ideal model which neglects the variation in extent of analyte mixing over space. For each unidirectional reaction (channel) with index $j$, the set of substrates consumed by the reactions is selected and their concentrations are denoted as $c^{(j)}(t)$. From that set, the first item, that of lowest index, is selected and denoted as $c_1^{(j)}(t)$. The rate of heat release due to channel $j$ is modelled as the product of the rate of change of concentration due to a channel $j$, $\dfrac{dc_1^{(j)}(t)}{dt}$, multiplied by the standard enthalpy change due to channel $j$, $\Delta H_j^{\circ}$. This is summed over all channels and multiplied by the fixed volume of the sample cell, V. The model can be expressed mathematically as:

$$\frac{dq}{dt} = V \sum_j \left( \frac{dc_1^{(j)}(t)}{dt} \right) \Delta H_j^{\circ} \qquad (7)$$

Summing over all the channels and selecting the product with the lowest index in the system ensures channels do not become double counted.

The signal, $S(t)$, can take into account the variation in extent of analyte mixing over space and is modelled by treating the observed rate of heat release at any spatial coordinate as a linear functional of rate of heat release at nearby coordinates. This is equivalent to the convolution of the ideal rate of heat release, as per equation (7) for example, with a fixed response function, $f^{ins}$. This can be expressed mathematically as:

$$S(t) = f^{ins} \otimes \frac{dq}{dt}$$

$$= V \int_0^t f^{ins}(\tau) \sum_j \left( \frac{dc_1^{(j)}(t-\tau)}{dt} \right)_j \Delta H_j^{\circ} d\tau \qquad (8)$$

Parameters of the response function $f^{ins}$ are learnable by the model. The signal can further be modelled as above further adding the buffer heat release term, $\beta_t$, and/or the baseline term, $\beta_t$.

The change of concentration is computed as the sum of the reaction term, $k(\mathbf{c})$, which models how the reagents change due to the reaction in the sample cell, and the source term, $g(\mathbf{c})$, which models the amount of reagent that is injected during an ITC experiment. The change in concentration is given by the ordinary differential equation $\dfrac{d\mathbf{c}(t)}{dt} = k(\mathbf{c}) + g(\mathbf{c})$. The term $\dfrac{dc_1^{(j)}}{dt}$ can be obtained by selecting, for channel $j$, the set of species consumed by that reaction, then further selecting the first species in that set.

The full model of the signal S(t) is given as the sum of the model given in equation (8) and adding the buffer heat release term and the baseline term. The full model can be represented with equation (9):

$$S(t) = V \int_0^t f^{ins}(\tau) \sum_j \left( k\left( c_i^{(j)}(t-\tau) \right) + g\left( c_i^{(j)}(t-\tau) \right) \right)_j \Delta H_j^{\circ} d\tau + \varepsilon_t + \beta_t \qquad (9)$$

Further models can be obtained by using each term in isolation. Therefore, a modelled signal can be provided as only the source term; buffer heat release term; reaction term; or baseline term. Other models can be provided as a combination of any of these terms. The modelled signal may be of a single ITC experiment or a set of ITC experiments.

Fitting the model

An example of fitting the model to the measurement data is presented here. The skilled person would readily understand that various methods of model fitting would be equally applicable.

In the preferred embodiment, a signal model is fitted to the data using a non-linear least squares regressor to determine a modelled signal. Any number of ITC experiments may be included in data. The signal model is similar to the model of equation (7) but without the baseline term $\beta_t$. In order to avoid the problem of converging to local minima, multiple initial parameters are used, and the signal model is fit by computing the regressor in parallel. A remainder signal is then calculated by subtracting the modelled signal from the measurement data to determine a remainder signal. This can be done because the parameters of the baseline are linear. Beneficially, the remainder signal can then be fit using an ordinary least squares regressor.

At step 330, a physical parameter of the sample is derived from the model. The physical parameter can be one of the parameters in the model. The physical parameter can be derived by combining multiple parameters to form a matrix. Alternatively, the physical parameter can be derived by combining multiple parameters in an equation to reach the desired physical property. A user may select which physical parameter they wish to obtain by using the display 240 and the I/O device 250. The physical parameter is then displayed on the display 240.

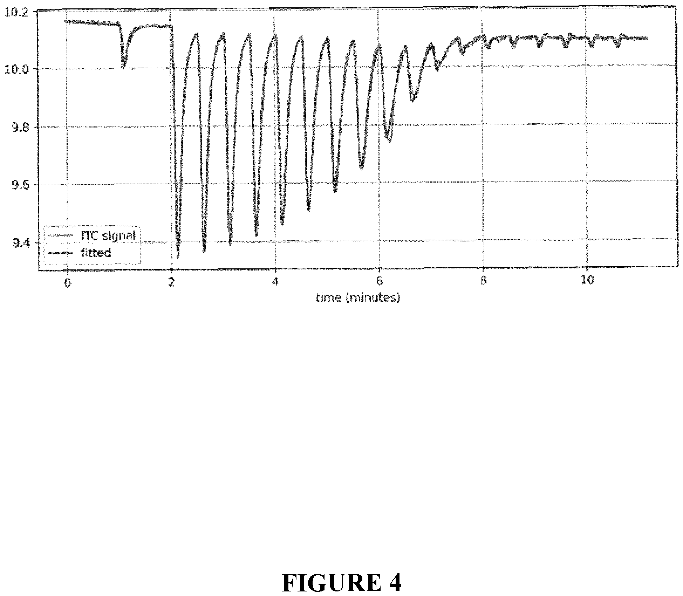

Figure 4 shows a fitted model to the measurement data according to the present disclosure. Notably, the measurement data that was acquired using 30 second injection spacing. Conventional ITC analysis methods would not be able to fit this measurement data because the sample cell will not have re-equilibrated between injections. As can be seen in Figure 4, the model is able to fit this data. Thereby presenting an improvement over the conventional ITC analysis.

Synthetic Data Generation and ML Training

Either as an alternative to, or to provide a starting estimate for, a least-squares solution, one or more machine learning models may be used. In such an approach, a set of training data comprising ITC signals or transformations thereof, with "labels" comprising the known values of the physical parameters, must exist. The source of data may be experimental or by simulation using equation 7 or some other appropriate theory of ITC.

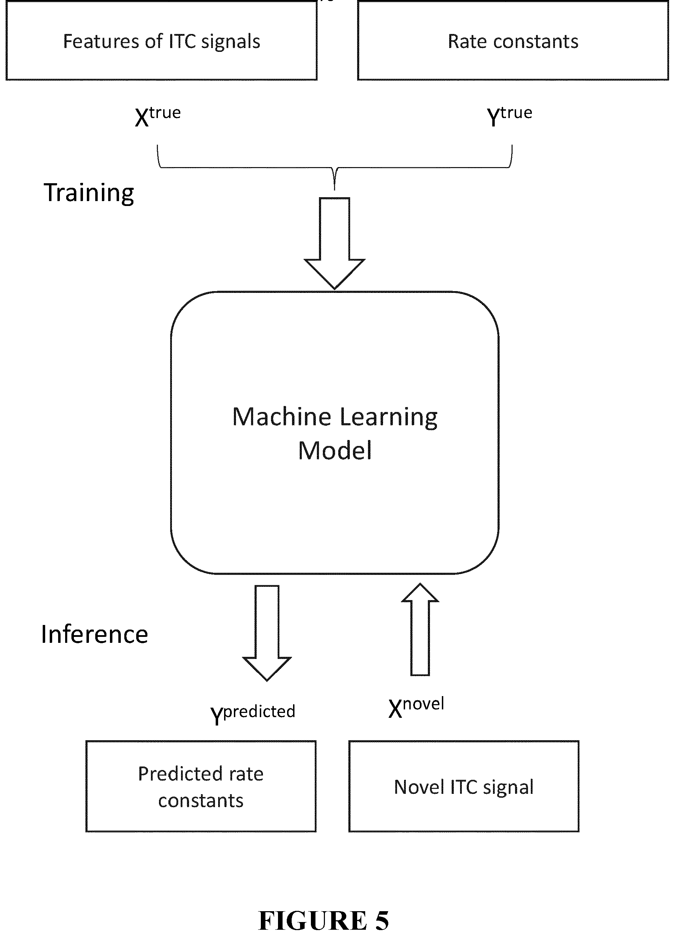

In the embodiment disclosed, training data is by simulation using equation 7. The purpose is to predict the physical parameters from the ITC signal for a chosen or unknown system of reactions. The one or more machine learning models can then make predictions without the use of least-squares fitting. Figure 5 shows training a machine learning model using known features of an ITC signal and known rate constants. During inference, a novel ITC signal is fed into the machine learning model which in turn predicts the rate constants.

It is often necessary to transform data for input to machine learning so that transformed inputs are always of the same length. The inventors realised that a transformation of the ITC signal, whose length is variable and under experimental control, to an input compatible with machine learning tools, may be achieved by the following: For a fixed number of injections, select signal over a fixed duration. To each of those segments, fit a surrogate model that provides a numerical approximation to the shape of the peak commensurate with that injection. The learned parameters of the surrogate model for each injection, once appended to a single vector, form a representation of the ITC signal and may be used as inputs to a machine learning method. The surrogate model may take the following form, for segment s:

$$s_t = \sum_k b_k f_k(t) \qquad (10)$$

With $\boldsymbol{b} = (b_1, b_2, ..., b_n)$ a vector of unknowns (to become the inputs of the ML model) and $\boldsymbol{f} = (f_1(t), f_2(t), ..., f_n(t))$ a set of functions of the user's choice. These are preferably Legendre polynomials. The skilled person will appreciate that any smooth functions may be used. Inasmuch as encoding the shapes of peaks, and with rate constants as data labels available from the method of data simulation, such a method delivers kinetics from ITC measurements, with the additional advantage of computation efficiency.

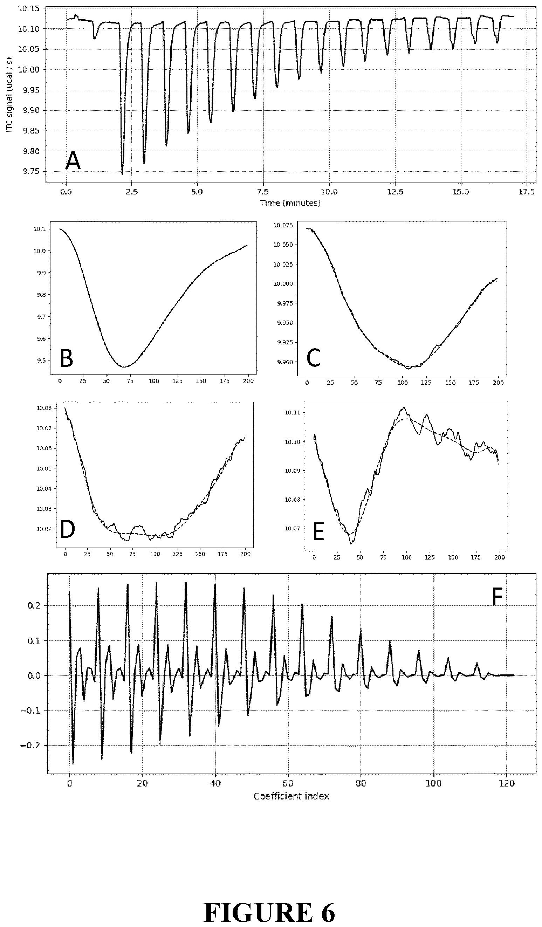

Figure 6 shows an example of the use of a surrogate model to describe an ITC signal. Subfigure A shows an example of an ITC signal generated by a surrogate model. Subfigures B-E show different points in time with the ITC signal from subfigure A as a solid line and a Legendre polynomial surrogate model of the peaks as a dotted line. The coefficients of the Legendre polynomial surrogate model can be used as features with which to train a machine learning model to learn physical parameters, e.g., rate constants, enthalpies, etc. Subfigure F shows the surrogate model coefficients, which serve as a fixed-length feature vector suitable for machine learning.

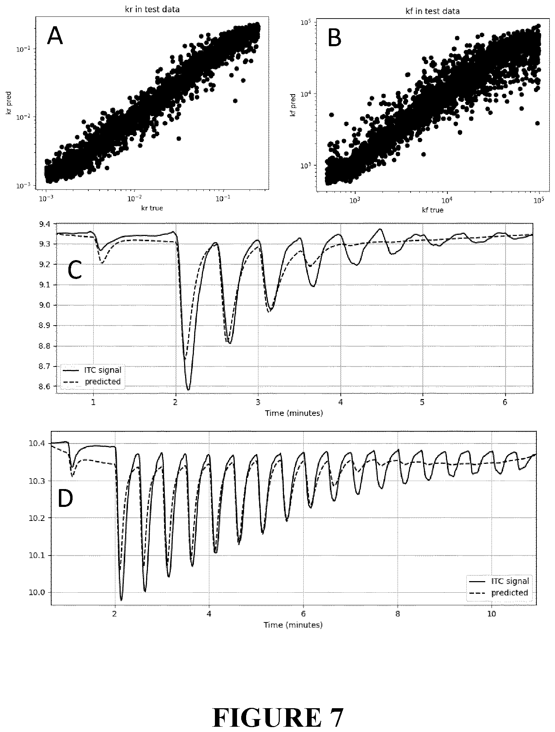

Turning to Figure 7, there is shown an example of the performance of a machine learning model (in this case, a random forest) trained using the methods described above. Subfigures C and D show examples of the inference of the machine learning model (dotted line) when compared to the actual ITC signal (solid line). Notably, the predictions shown in Subfigures C and D are not as precise as that of Figure 4 (using the least-squares method), but can be made in approximately 1 millisecond using a laptop of moderate power. Hence this method offers an approximate estimate very quickly. Subfigures A and B show the model's correlation between the true and predicted (x- and y-axis, respectively) of the reverse and forward rate constant, respectively.

Model identification using synthetic data and ML

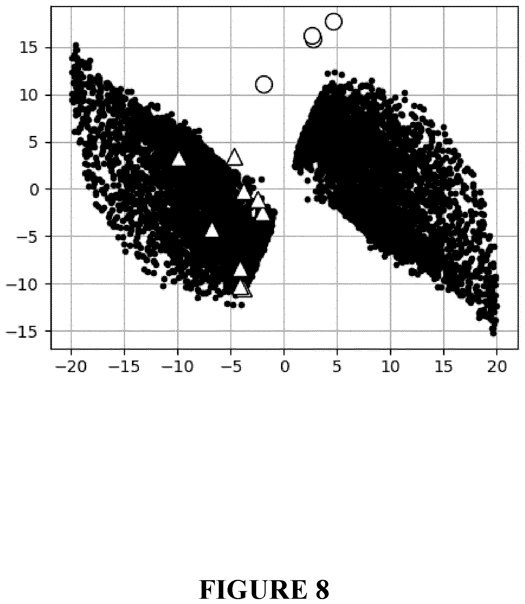

Another use of machine learning when applied to the present invention is the identification of the probable or possible reactions in a system. This is intended to solve the problem that an ITC user may not know how the sample and analytes interact (it being the purpose of an experiment to determine this). Such an approach follows similar principles to those described above, with the calculation of features describing ITC signals, those signals, for which the ground truth must be known, being generated by simulation using Equation 7. Experimental data may also be included. Given feature sets for ITC signals created by different types of reactions or reaction networks, classifications of those reaction networks may be learned. An example of the representation of ITC data in a low-dimensional feature space is given in Figure 8, in which the principle of classifying a novel signal as belonging to given reaction network class is demonstrated. The action of classification may be made by a machine learning model, such as a support vector machine classifier or neural network. The skilled person will understand that any machine learning model that learns discrete classes from continuous features may be appropriate. Figure 8 shows data represented in PCA space. The black dots represent features of a library of simulated ITC signals with single site binding. The triangle data points show experimental observations of a system known to interact by single site binding. The white circle data points show experimental observations of a system known not to interact by single site binding. Therefore, it can be seen that the white circle data points, inasmuch as lying far from the black dots, will not be compatible with a single site binding model.

Generality to other instruments

With respect to the above description, it is to be realised that the methods described can be used in conjunction with any appropriate microcalorimeter. Therefore, the foregoing is considered as illustrative only of the principles of the invention. Further, since numerous modifications and changes to the methods will readily occur to those skilled in the art, it is not desired to limit the invention to the exact steps and equations shown and described, and accordingly, all suitable modifications and equivalents may be resorted to, falling within the scope of the invention.

**Claims**

1. A computer-implemented method of analysing isothermal titration calorimetry data, comprising:

   obtaining isothermal titration calorimetry measurement data from analysis of one or more samples;
   fitting a model to the measurement data, the model comprising an expression for each of:

   a source term modelling the injection of an analyte solution;
   a buffer heat release term modelling the heat released from the mixing of buffers during injection of an analyte solution;
   a reaction term modelling a reaction between an analyte and the sample; and
   a baseline term comprising a series of basis functions; and

   determining a physical parameter of the sample from the model.

2. The method of claim 1, wherein the source term models the injection of an analyte solution as a bell-shaped function.

3. The method of claim 1, wherein the bell-shaped function is either a Gaussian function or a Lorentzian function.

4. The method of any preceding claim wherein the baseline term is a power series or Fourier series.

5. The method of claim 4, wherein the baseline term is a power series of Legendre polynomials.

6. The method of any preceding claim, wherein the buffer heat release term models the heat released from the mixing of buffers during injection of an analyte solution as a squared sine lobe.

7. The method of any preceding claim, wherein fitting the model comprises:

   fitting a signal model that does not comprise the baseline term to determine a modelled signal;
   subtracting the modelled signal from the measurement data to determine a remainder signal;
   fitting the baseline term to the remainder signal.

8. The method of claim 7, wherein fitting the model further comprises:

   fitting a final model that includes each of: the source term, buffer heat release term, reaction term and baseline term;
wherein the physical parameter is determined from the final model.

9. The method of claim 7 or 8, wherein fitting the signal model comprises using a non-linear least squares regressor.

10. The method of any of claims 7 to 9, wherein fitting the baseline term comprises using an ordinary least squares regressor.

11. A computer-implemented method of producing a model for analysing isothermal titration calorimetry data, comprising:

generating synthetic data using a model, the model comprising;

a source term modelling the injection of an analyte solution;
a buffer heat release term modelling the heat released from the mixing of buffers during injection of an analyte solution;
a reaction term modelling a reaction between an analyte and the sample; and
a baseline term comprising a series of basis functions;

training a machine learning model using the synthetic data.

12. A method of analysing isothermal titration calorimetry data, comprising:

obtaining isothermal titration calorimetry measurement data from analysis of a sample;
determining a physical parameter of the sample from a model produced according to claim 11.

13. A machine-readable storage medium, comprising instructions for configuring a computer to:

obtain isothermal titration calorimetry measurement data from analysis of a sample;
fit a model to the measurement data, the model comprising an expression for each of:

a source term modelling the injection of an analyte solution;
a buffer heat release term modelling the heat released from the mixing of buffers during injection of an analyte solution;
a reaction term modelling a reaction between an analyte and the sample; and
a baseline term comprising a series of basis functions; and

determine a physical parameter of the sample from the model.

14. An isothermal titration calorimetry, ITC, instrument configured to perform the method of any of claims 1 to 12.

15. The ITC instrument of claim 14, comprising:

a sample cell for containing a sample;
a reference cell for containing a reference solution;
an injection mechanism for injecting an analyte solution;
a differential temperature sensor for determining a temperature gradient across the sample cell and the reference cell;
a sample heater for heating the sample cell;
a reference heater for heating the reference cell;
a controller configured to receive input from the differential temperature sensor and control the sample and reference heaters such that the temperature in the sample cell and reference cell is the same; and
a computer configured to receive measurement data from the controller and perform the method of any claims 1 to 12.

EP 4 653 856 A1

**FIGURE 1**

11

**FIGURE 2**

310 – Obtain isothermal titration calorimetry measurement data from analysis of a sample

320 – Fit a model to the measurement data

330 – Determine a physical parameter of the sample from the model

**FIGURE 3**

**FIGURE 4**

Features of ITC signals

Rate constants

$X^{true}$

$Y^{true}$

Training

Machine Learning Model

Inference

$Y^{predicted}$

$X^{novel}$

Predicted rate constants

Novel ITC signal

**FIGURE 5**

**FIGURE 6**

**FIGURE 7**

**FIGURE 8**

| | Europäisches Patentamt European Patent Office Office européen des brevets | **PARTIAL EUROPEAN SEARCH REPORT** under Rule 62a and/or 63 of the European Patent Convention. This report shall be considered, for the purposes of subsequent proceedings, as the European search report | **Application Number** EP 24 17 7182 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BURNOUF DOMINIQUE ET AL: "kinITC: A New Method for Obtaining Joint Thermodynamic and Kinetic Data by Isothermal Titration Calorimetry", JOURNAL OF THE AMERICAN CHEMICAL SOCIETY, vol. 134, no. 1, 16 December 2011 (2011-12-16), pages 559-565, XP093233016, ISSN: 0002-7863, DOI: 10.1021/ja209057d * Sections "Introduction", "Results and Discussion" and "Materials and method"; page 559 - page 565; figures 1,4 * ----- | 1-10, 13-15 | INV. G01N25/48 |
| A | LI DEXING ET AL: "Synergetic Determination of Thermodynamic and Kinetic Signatures Using Isothermal Titration Calorimetry: A Full-Curve-Fitting Approach", ANALYTICAL CHEMISTRY, vol. 89, no. 13, 14 June 2017 (2017-06-14) , pages 7130-7138, XP093233085, ISSN: 0003-2700, DOI: 10.1021/acs.analchem.7b01091 * the whole document * ----- -/-- | 1-10, 13-15 | TECHNICAL FIELDS SEARCHED (IPC) G01N |

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 13 December 2024 | Gilow, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04E07)

page 1 of 2

Europäisches
Patentamt

European
Patent Office

Office européen
des brevets

**PARTIAL EUROPEAN SEARCH REPORT**

Application Number

EP 24 17 7182

| | DOCUMENTS CONSIDERED TO BE RELEVANT | | CLASSIFICATION OF THE APPLICATION (IPC) |
|---|---|---|---|
| Category | Citation of document with indication, where appropriate, of relevant passages | Relevant to claim | |
| A | DUVVURI HIRANMAYI ET AL: "pytc : Open-Source Python Software for Global Analyses of Isothermal Titration Calorimetry Data", BIOCHEMISTRY, vol. 57, no. 18, 5 April 2018 (2018-04-05) , pages 2578-2583, XP093233009, ISSN: 0006-2960, DOI: 10.1021/acs.biochem.7b01264 * the whole document * ----- | 1-10, 13-15 | |
| A | DUMAS PHILIPPE: "Isothermal titration calorimetry in the single-injection mode with imperfect mixing", EUROPEAN BIOPHYSICS JOURNAL, SPRINGER, DE, vol. 51, no. 1, 1 January 2022 (2022-01-01), pages 77-84, XP037687715, ISSN: 0175-7571, DOI: 10.1007/S00249-021-01588-4 [retrieved on 2022-01-08] * the whole document * ----- | 1-10, 13-15 | |

TECHNICAL FIELDS SEARCHED (IPC)

EPO FORM 1503 03.82 (P04C10)

page 2 of 2

Europäisches
Patentamt

European
Patent Office

Office européen
des brevets

**INCOMPLETE SEARCH
SHEET C**

**Application Number**

**EP 24 17 7182**

Claim(s) completely searchable:
        1-10, 13-15

Claim(s) not searched:
        11, 12

Reason for the limitation of the search:

In reply to the invitation pursuant to Rule 62a EPC to indicate which
independent claims to be searched, the applicant has indicated that the
search should be carried out on the basis of claims 1-10 and 13-15.
Consequently, the search has been limited to claims 1-10 and 13-15.